Europäisches Patentamt

European Patent Office

Office européen des brevets

(11) Veröffentlichungsnummer: **0 301 329**
**A2**

## (12) EUROPÄISCHE PATENTANMELDUNG

(21) Anmeldenummer: 88111307.0

(51) Int. Cl.4: **G01N 21/87**

(22) Anmeldetag: **14.07.88**

(30) Priorität: **31.07.87 IT 6767587**

(43) Veröffentlichungstag der Anmeldung:
**01.02.89 Patentblatt 89/05**

(84) Benannte Vertragsstaaten:
**AT BE CH DE ES FR GB GR LI NL SE**

(71) Anmelder: **Roggero, Paolo**
**via Po no. 1**
**I-10124 Torino(IT)**

Anmelder: **Trossarelli, Carlo**
**via Lamarmora no. 22**
**I-10128 Torino(IT)**

(72) Erfinder: **Trossarelli, Carlo, Dr.**
**via Lamarmora No. 22**
**I-10128 Torino(IT)**

(74) Vertreter: **Aprà, Andrea, Dipl.-Ing. Dr. jur. et al**
**Via Cernaia 27**
**I-10121 Torino(IT)**

(54) **Beleuchtungsvorrichtung zur spektroskopischen Beobachtung von Mineralien, Juwelen o.dgl.**

(57) Die Beleuchtungsvorrichtung zur spektroskopischen Beobachtung von Minerialien, Juwelen o.dgl., bei der das Prüfstück durch eine Weisslichtquelle beleuchtet wird, umfasst erfindungsgemäss wenigstens eine Lichtleitfaser (22), um das durch das Prüfstück geflossene Beleuchtungslicht einem Beobachtungs-Spektroskop (30) zuzuleiten.

Fig. 2

Fig. 1

EP 0 301 329 A2

## Beleuchtungsvorrichtung zur spektroskopischen Beobachtung von Mineralien, Juwelen o.dgl.

Vorliegende Erfindung betrifft eine Beleuchtungsvor -richtung zur spektroskopischen Beobachtung von Minera lien, Juwelen o. dgl., bei der das zu prüfende Stück mittels einer Weisslichtquelle beleuchtet wird.

Bekanntlich ist bei der analytischen Prüfung von Mine ralien auf spektroskopischem Wege das zu beobachtende Mineral, Juwel o. dgl. - im Folgenden einfachhin "Prüf stück" bezeichnet - hinreichend durch weisses Licht zu beleuchten, damit das vom Prüfstück abgegebene Rest licht mittels eines Spektroskopes analysiert werden kann. Zu diesem Zwecke dienen Beleuchtungsvorrichtungen der hier betrachteten Art.

Um die Beleuchtung eines am Spektroskop zu beobachten den Prüfstückes zu optimieren, ist bereits eine Beleuchtungsvorrichtung mit einer Weisslichtquelle, wie einer Glühlampe (z.B. Halogenlampe) und einem so ge -nannten "dichtroitischen" Reflektor vorgeschlagen worden, wobei das ausgestrahlte/reflektierte Lichtbündel über ein Wärmedämmfilter und ein optisches Linsensy -stem dem Eingang eines optischen Galsfasebündels, des sen Ausgang in der Nähe des Prüfstücks angeordnet ist, zugeführt wird. Ausserdem ist diese Beleuchtungsvor -richtung mit einem Lüfterrad zur Zwangskühlung der Lampe und der dieser nahe gelegenen bzw. von dieser durch Bestrahlung erhitzten Teile versehen. Diese Beleuchtungsvorrichtung weist jedoch nachstehende Haupt nachteile auf:

- Der dichroitische Reflektor dient zur Reflexion der Strahlung nur im sichtbaren Spektrum in Richtung des optischen Galsfaserbündels und auf Grund der Durchläs sigkeit in entgegengesetzter Richtung eines gewissen Anteils der Infrarotstrahlung, die übrigens Hitze erzeugt, um diese von dem Benutzungsbereich des restlichen von der Lampe ausgestrahlten Lichtes abzuleiten. Daher tritt in das optische Glasfaserbündel eine redu zierte Wärmemenge ein. Dieser dichroitische Reflektor beseitigt jedoch nicht nur die IR-Strahlen, sondern erzeugt, wenn auch in beschränktem Masse, Absorptions linien oder Absorptionsbanden im sichtbaren Spektrumbereich. Ausserdem erfordert die Gruppe Lampe/Reflektor, wie bereits erwähnt, eine Zwangskühlung mit Lüfterrad, die u.a. mit einer ständigen und lästigen Geräuscherzeugung verbunden ist.

- Der vom Lichtbündel durchflossene Wärmedämmfilter zum Zurückhalten und Absorbieren der Wärme erzeugenden IR-Strahlung bietet zwar den Vorteil einer teilweisen Absorption im Rot- und Orangenrotbereich ab dem Beginn der sichtbaren Strahlung. Diese Farbberei che werden tatsächlich in starkem Masse von den Glühlampen abgegeben und daher bewirkt das Filter einen teilweisen "Ausgleich" betreffs der Farbtemperatur. Diese Absorption liegt jedoch höher gegenüber den benötigten Werten. Im Ergebnis weist das restliche (zur Beleuchtung des Prüfstücks bestimmte) Licht eine dominierende grünliche Tönung auf.

- Das optische Linsensystem ist mit einem nicht zu vernachlässigenden technischen und kostenmässigen Aufwand verbunden. Im bestmöglichen Fall bestehen die Linsen aus einem Glas, das abgesehen von einer unvermeidlichen allgemeinen Absorption im gesamten sichtba ren Bereich keine für das beobachtende Auge einschätz bare Färbung des Restlichtes liefert.

- Das optische Glasfaserbündel liefert am Ausgang ein so genanten "kaltes" Licht (infolge der Abwesenheit der Wärme erzeugenden IR-Strahlung im austretenden Lichtbündel). Dieses Licht ist jedoch als "unausgegli chen" zu bewerten, weil es in bedeutendem Masse auch an blauer und violetter Strahlung mangelt infolge der starken Absorption durch die Galsfasern in diesem Spektrumbereich. Daher erteilen die optischen Glasfasern dem von ihnen geleiteten Licht eine weitere vorherrschende grünliche Tönung. Ausserdem liefern sie von der ihnen vom optischen Linsensystem zugeführ ten Lichtmenge ein zur Beleuchtung des Prüfstücks bestimmtes Lichtbündel, das divergent ist und so eine Energieverschwendung und Verringerung der für die Prü fung bestimmten Gesamtlichtstärke verursacht.

Es ist ausserdem beachten, dass die Empfindlichkeit des menschlichen Auges im blau-violetten Bereich äusserst niedrig ist und zwar erheblich niedriger als gegenüber den anderen Farben des Spektrums. Daraus ergibt sich die Wichtigkeit einer grösstmöglichen "Rückgewinnung" der Energie in diesem Bereich des Spektrums.

Über die oben aufgeführten Nachteile hinaus ist auch zu bedenken, dass aus Gründen der Konstruktion und Aus legung im Zusammenhang mit dem Funktionsprinzip des Gerätes in das Spektroskop eine ganz geringe Lichtmenge durch einen stirnseitigen Schlitz eintritt. Beim Gebrauch des Gerätes stehen diesbezüglich die Form und/oder die Abmessungen des Prüfstücks in Widerspruch mit der engen Breite des Schlitzes, wie nachstehend an Hand einiger Beispiele von Juwelen bzw. Edelsteinen o.dgl., die spektroskopisch analisiert werden sollen, näher erläutert wird (dabei wird der Ausdruck Juwel oder Edelstein der Einfachheit halber durch das Wort "Stein" ersetzt):

- Grosser Stein mit flachen oder gewölbten, jedoch glatten Oberflächen; oder grosser Stein mit verhältnismässig grossen Facetten:

In solchen Fällen bestehen keine besonderen Schwierigkeiten bei der Beobachtung des Absorptions- und/oder Emissionsspektrums des Steines.

- Grosser Stein mit verhältnismässig kleinen Facetten; sehr kleine Facetten senden durch den Schlitz des Spektroskops Farbbündel, die sehr verschiedene Richtungen und Formen aufweisen und vor allem zu einander nicht parallel verlaufen. Der Beobachter sieht ein Spektrum mit Flecken oder mit mehr oder minder scharfen Bereichen; die Sicht ist gestört und eventuelle Absorptionslinien oder -banden können nicht immer als solche erkannt werden, oder Grenzen zwischen unregelmässig beleuchteten Bereichen können irriger Weise als Absorptionserscheinungen beurteilt werden. Das Auffinden einer optimalen Beobachtungsstellung ist erschwert und die Ergebnisse sind nicht zufriedenstellend bzw. widerspruchsvoll oder gar irreführend.

- Kleiner Stein: das gesamte den Schlitz des Spektroskops passierende Licht besteht aus zwei unterschiedlichen Teilmengen:

. einer durch das Prüfstück passierte Teilmenge mit entsprechenden Restfarbenmerkmalen, die von der Beschaffenheit des Steines abhängen. Diese Teilmenge ist für die spektroskopische Prüfung brauchbar;

. einer von der Steinauflage reflektierten Teilmenge, auch wenn diese Auflage schwarz ist. Diese Teilmenge enthält keine Information über den zu prüfenden Stein.

Als Folge davon erscheint dem Beobachter ein "verdünntes" Spektrum in einem mehr oder minder starken Blendlicht. In diesem Fall verschwinden schwache Linien oder Banden, was bedeutet, dass keine zur Identifizierung des Steines nützliche Diagnostik-Informationen vorliegen.

- Grosser oder kleiner Stein, der im gesamten sichtbaren Bereich stark absorbiert: die im ganzen Bereich des Spektrums stark absorbierenden Steine bieten kaum eine Möglichkeit einer spektroskopischen Analyse, ausser etwa in den Randbereichen des Steines (die im allgemeinen dünner sind) und/oder nur mit sehr starker Beleuchtung. In solchen Fällen kann der vorausgehende Nachteil auftreten: durch den Schlitz des Spektroskops tritt eine gewisse Lichtmenge, die nicht durch den Stein passiert ist und dies mit den vorbeschriebenen Folgen.

Es ist nun Hauptaufgabe vorliegender Erfindung, eine Beleuchtungsvorrichtung zur spektroskopischen Beobachtung von Mineralien, Juwelen o. dgl. zu schaffen, bei der die aufgeführten Nachteile wirksam beseitigt sind.

Eine zweite Aufgabe der Erfindung besteht darin, diese Beleuchtungsvorrichtung derart auszubilden, dass sie gleichzeitig einen Vergleich der Spektren des Prüfstücks mit den durch ein Vergleichslicht erhaltenen und/oder mit den eine oder mehrere bekannte Substanzen betreffenden Spektren ermöglicht und zwar derart, dass einerseits durch den Vergleich eventuelle infolge ihrer Schwäche nicht unmittelbar als solche erkennbare Absorptionen oder Emissionen feststellbar sind und andererseits die Möglichkeit gegeben ist, unmittelbare Vergleiche zwischen bekannten typischen Spektren und jenen des Prüfstücks zu ziehen.

Ausserdem soll die Beleuchtungsvorrichtung derart ausgebildet sein, dass sie gestattet, unter mehreren Beobachtungsstellungen am Spektroskop rasch und sicher jene auszuwählen, bei der dem Spektroskop das für die Beobachtung günstigste Restlicht zugeführt wird.

Endlich soll die Beleuchtungsvorrichtung vereinfacht im Aufbau, sicher und zuverlässig in der Funktion und leicht in der Bedienung sein.

Diese Aufgaben sind bei einer Beleuchtungsvorrichtung zur spektroskopischen Beobachtung von Mineralien, Juwelen o.dgl. erfindungsgemäss durch die Merkmale des kennzeichnenden Teils des Hauptanspruchs 1 gelöst.

Weitere Merkmale und Vorteile der Erfindung ergeben sich aus den Unteransprüchen.

Die Erfindung wird nachstehend an Hand eines in der Zeichnung dargestellten, den Erfindungsumfang nicht einschränkenden Ausführungsbeispiels näher beschrieben. Es zeigen:

Fig. 1 ein Schaubild der Beleuchtungsvorrichtung gemäss der Erfindung zur spektroskopischen Beobachtung von Mineralien, Juwelen o.dgl. mit zur besseren Klarheit teilweise aufgebrochenen Teilen;

Fig. 2 eine Einzelansicht in grösserem Masstab eines in Prüfstellung befindlichen Prüfstücks (Edelsteins);

Fig. 3 eine der Fig. 1 ähnliche Darstellung, jedoch mit der Beleuchtungslampe für das Prüfstück in einer anderen Arbeitsstellung und mit einem optischen Zusatzreflektor in Betriebsstellung am erfindungsgemässen Beleuchtungsgerät zur Rückgewinnung von weiterer dem Prüfstück zuleitbarer Lichtenergie;

Fig. 4 eine Einzelansicht in grösserem Masstab eines in der Beleuchtungsvorrichtung nach Fig. 3 in Prüfstellung befindlichen Prüfstücks (Steins);

Fig. 5 einen Schnitt in grösserem Masstab der Beleuchtungsvorrichtung nach Fig. 1 gemäss der Linie V - V in Fig. 6, zur besseren Klarheit teilweise aufgebrochen;

Fig. 6 einen Schnitt gemäss der Linie VI - VI in Fig. 5, jedoch der besseren Klarheit halber ohne den Deckel des kastenförmigen Gehäuses und ohne Spektroskop;

Fig. 7 einen Schnitt gemäss der Linie VII - VII in Fig. 5;

Fig. 8 einen Schnitt gemäss der Linie VIII - VIII in Fig. 5, der besseren Klarheit halber ohne den Schlitten für das Spektroskop;

Fig. 9 eine Ansicht des das Spektroskop tragenden Schlittens der erfindungsgemässen Beleuchtungs vorrichtung in Richtung des Pfeiles IX in Fig. 5, jedoch zur besseren Klarheit ohne Spektroskop;

Fig.10 einen Schnitt gemäss der Linie X - X in Fig.9;

Fig.11 einen Schnitt gemäss der Linie XI - XI in Fig. 9.

In der Zeichnung ist mit 10 eine erfindungsgemässe Beleuchtungsvorrichtung zur spektroskopischen Beobachtung von Mineralien, Juwelen 0.dgl. in ihrer Gesamtheit bezeichnet.

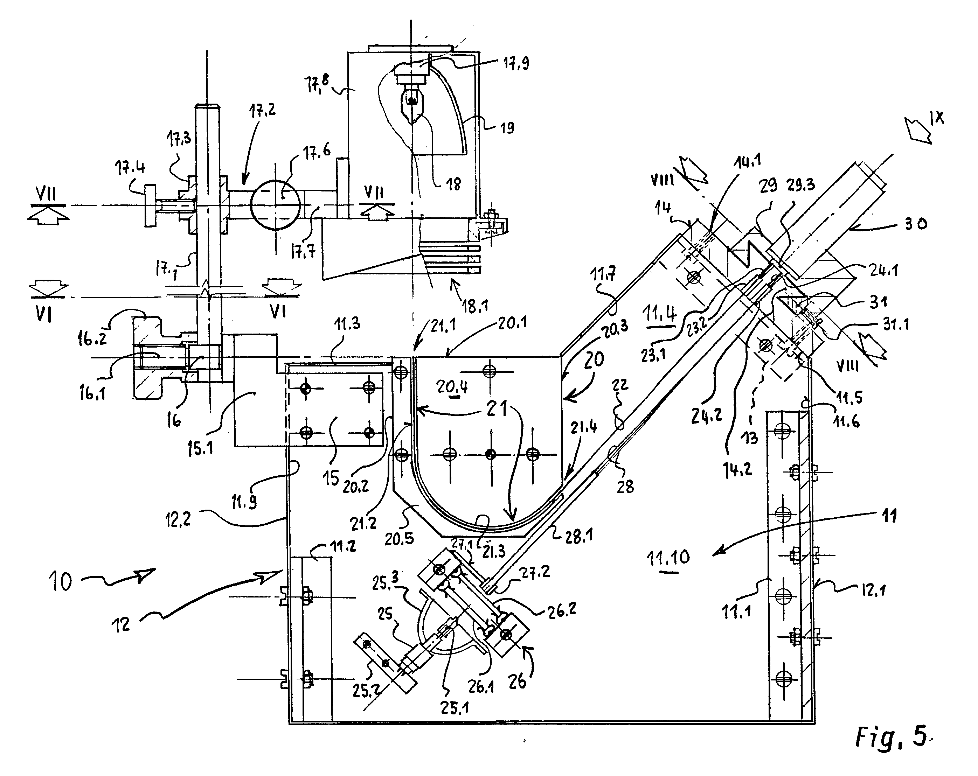

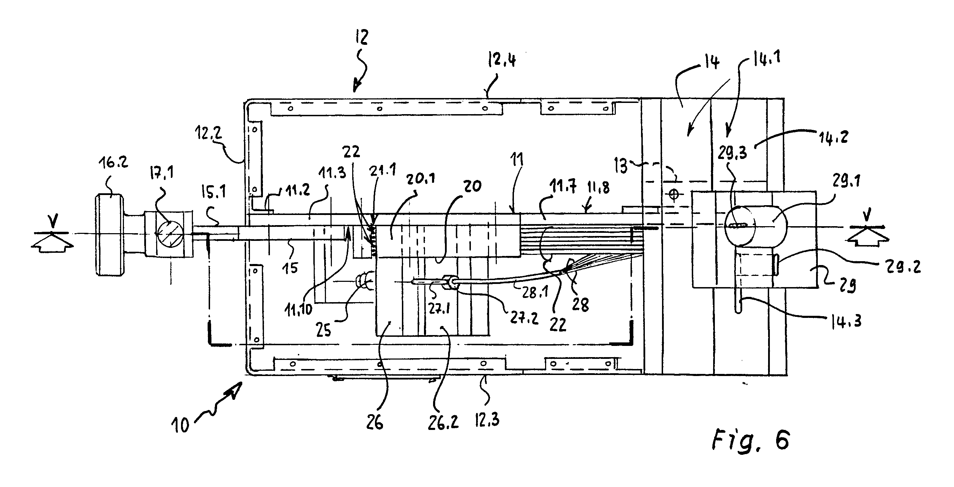

Die Beleuchtungsvorrichtung 10 umfasst eine feste senkrecht angeordnete Lagerplatte 11 aus Metall, z.B. Aluminium, mit im wesentlichen rechteckiger Ausbildung. Die Lagerplatte 11 ist in einem kasten förmigen Stütz- und Schutzgehäuse 12 z.B. aus Blech mittels paarweise angeordneter, an die Vor -derwand 12.1 und Rückwand 12.2 des kastenförmi -gen Gehäuses 12 angeschraubter Winkelstücke 11.1 und 11.2 aus Metall befestigt. Das kastenförmige Gehäuse 12 bildet das Stativ der Beleuchtungsvor -richtung 10. Die Lagerplatte 11 ist nahe der verti kalen Längsmittelebene des Gehäuses 12 und paral -lel zur selben angeordnet. Von der oberen Seite 11.3 der Lagerplatte 11 steht einstückig mit dieser und in derselben Ebene der Platte liegend ein Flügel 11.4 vor und weist ein Profil nach Art eines Winkelstücks auf (Fig. 5). Eine Seite 11.5 des Flügels 11.4 schliesst sich mit einem Neigungs winkel von etwa 45° zur Senkrechten an die vertika le Vorderseite 11.6 der Lagerplatte 11 an, während die andere Seite 11.7 des Flügels in die obere Seite 11.3 der Platte 11 übergeht und zwar nahe der vertikalen Quermittelebene derselben Platte. Ein L-förmiges Profilstück 13 ist mit der einen Seite z.B. mittels Schrauben an der von der vertikalen Längsmittelebene des Gehäuses 12 entfernteren Fläche 11.8 (Fig. 6) der Platte 11 befestigt und mit der Grundfläche seiner freien Seite in gleicher Ebene gelegen, wie die geneigte Seite 11.5 des Flügels 11.4 der Platte 11. Das L-förmige Winkelstück 13 bildet eine Konsole, auf der z.B. mittels Schrauben eine feste rechteckige Platte 14 aus Metall, z.B. Aluminium, gegenüber der Lagerplatte 11 quer auskragend und den durch die beiden Seitenwände 12.3, 12.4 des kastenförmigen Gehäuses 12 abgegrenz ten Zwischenraum abschliessend festgesetzt ist. Dabei weisen die beiden Seitenwände 12.3 und 12.4 des kastenförmigen Gehäuses 12 ein Profil auf, das jenem der Lagerplatte 11 samt dem Flügel 11.4 entspricht, während die Vorderwand 12.1 und die Rückwand 12.2 des Gehäuses einen rechteckigen Umriss aufweisen, der höhenmässig der senkrechte Vorder- bzw. Rückseite 11.6 bzw. 11.9 der Platte 11, gegen die diese Wände anliegen, entspricht. Die rechteckige Platte 14 erstreckt sich mit einer Neigung von etwa 45° zur ver tikalen Quermittelebene des kastenförmigen Gehäuses 12 und bildet einen Auflagetisch, auf dem, wie noch nachfolgend eingehender beschrieben wird, das Spektroskop der Beleuchtungsvorrichtung 10 verschiebbar gelagert ist. Auf der Sichtfläche 14.1 der Platte 14 ist einstückig mit dieser eine Schwalbenschwanzführung 14.2 etwa in der Mitte der Platte und sich über deren Länge erstreckend ausgebildet.

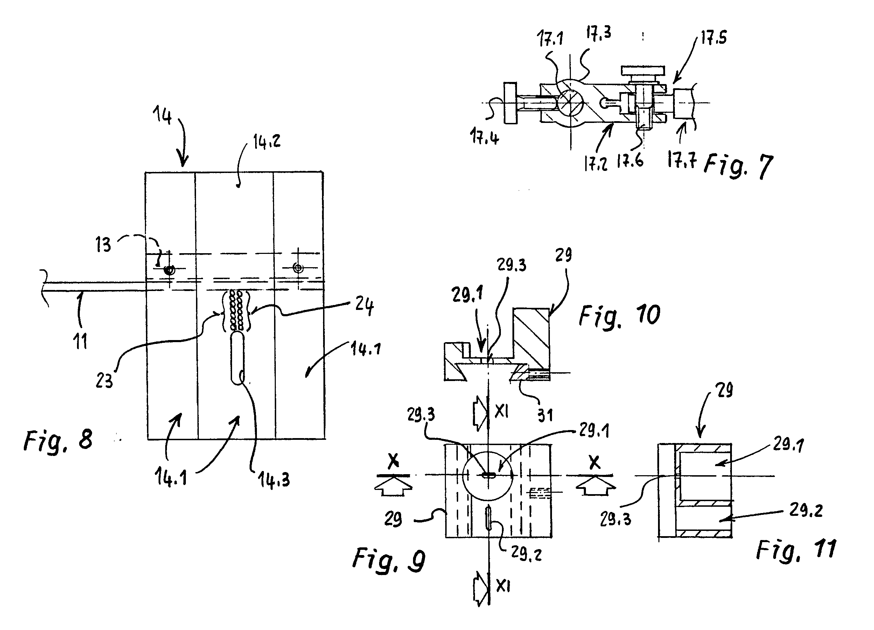

Die Lagerplatte 11 trägt im durch die hintere verti kale Seite 11.9 und obere waagerechte Seite 11.3 be grenzten Winkelbereich und an ihrer der vertikalen Längsmittelebene des Gehäuses 12 näheren Fläche 11.10 einen z.B. mittels Schrauben anbefestigten L-förmigen Stützbügel 15, dessen vertikaler freier Schenkel 15.1 vom kastenförmigen Gehäuse 12 nach aussen vorsteht. Dieser vertikale Schenkel 15.1 des Bügels 15 besitzt einstückig mit demselben einen Gelenkstift 16 (Fig. 5) mit freiem Gewindeende 16.1 und mit horizontaler, im wesentlichen inderselben vertikalen Längsmittelebene des Gehäuses 12 angeordneter Achse. Die Achse des Gelenkstiftes 16 liegt etwas höher als die obere Seite 11.3 der Lagerplatte 11. An diesem Stift 16 ist ein zylindrischer Arm 17.1 angelenkt und in einer zur vertikalen Längsmittelebene des Gehäuses 12 senkrechten Querebene schwenkbar. Zur zeitwei -sen Feststellung des Schwenkarmes 17.1 in einer gewünschten Schwenkstellung am Gelenkstift 16 ist eine von Hand betätigbare Rändelmutter 16.2 im Eingriff mit dem endseitigen Gewinde 16.1 des Gelenkstiftes 16 vorgesehen. Der Schwenkarm 17.1 trägt seinerseits einen sich rechtwinklig dazu erstreckenden, verschiebbaren Klemmarm 17.2. Dieser Klemmarm 17.2 ist mittels einer endseitigen Buchse 17.3 am Schwenkarm 17.1 in dessen Axialrichtung verschiebbar und um den Schwenkarm in dazu rechtwinkligen Ebenen verschwenkbar, wobei mittels einer sich durch die Buchse erstreckenden, von Hand betä tigbaren Druckschraube 17.4 der Klemmarm 17.2 in einer gewünschtn Verschiebe- und Drehstellung am Schwenkarm 17.1 feststellbar ist. An dem der Buchse 17.3 entgegengesetzten Ende besitzt der Klemmarm 17.2 eine Klemme 17.5 mit feststehenden, jedoch elastisch nachgebenden Backen, die mittels eines Schraubstifts 17.6 festspannbar bzw. entspannbar sind, wobei der mit seiner Achse in einer zur Ebene des Schwenkarmes 17.1 normalen Ebene lie gende Schraubstift zu diesem Zwecke mit einem von Hand zu betätigenden Rändelkopf versehen ist (Fig. 7). An diesem Schraubstift 17.6 und zwischen den Backen der Klemme 17.5 ist ein Schenkel eines L-förmigen Bügels 17.7 angelenkt, während am anderen Schenkel des Bügels eine zylindrische, starre Schutzhaube 17.8 z.B. aus Blech für eine Lampenfassung 17.9 angebracht ist. Der L-förmige Bügel 17.7 ist daher zusammen mit der Haube 17.8 in durch die Achse des Schwenkarmes 17.1 gehende Ebenen verschwenkbar und mittels des Schraubstiftes 17.6 in der gewünschten Schwenkstellung lösbar festsetzbar. Die Lampenfassung 17.9 trägt eine weisses Licht aus strahlende Glühlampe 18, z.B. eine Halogenlampe. An der Einmündung der Haube 17.8 ist ein beispielsweise mittels Schrauben befestigter rohrförmiger Filterhalter 18.1 angeordnet und mit durchgehenden Schlitzen zum Einsetzen austauschbarer optischer Fil ter, darunter eventuell auch ein nicht gezeigter Wärmedämmfilter, versehen. Das von der Lampe 18 ausgestrahlte Licht wird mittels eines ellipsoidförmigen, nicht dichroitischen Spiegelreflektors 19 z.B. aus Aluminium reflektiert. Die Lampe 18 ist im we -sentlichen im ersten Brennpunkt des Ellipsoid-Reflektors 19 angeordnet.

Mittels der beschriebenen Anordnung ist die Lampe 18 ausserhalb des kastenförmigen Gehäuses 12 gehaltert und in zur vertikalen Längsmittelbene des Gehäuses vertikaler Querebene verschwenkbar sowie gegenüber dem Gehäuse zu- und wegbewegbar.

Im Raum zwischen dem Stützbügel 15 und dem Flügel 11.4 ist an der Fläche 11.10 der Lagerplatte 11 ein quaderförmiger, als Halterung für Lichtleitfasern dienender Block 20 z.B. aus Aluminium mit an der Grundfläche abgefasten Kanten mittels Schrauben o.dgl. befestigt. Die vertikale Längsmittelbene des kasten förmigen Gehäuses 12 fällt im wesentlichen mit der Symmetrieebene des Blockes 20 zusammen. Diese Block 20 ist mit seiner oberen Fläche 20.1 höher gelegen genüber der oberen Seite 11.3 der Lagerplatte 11 und im wesentlichen in derselben horizontalen Ebene der Achse des waagerechten Gewindestiftes 16 an geordnet. Die Gesamthöhe des Blockes 20 ist etwa gleich der halben Höhe der Lagerplatte 11 an der oberen Seite 11.3 derselben gemessen. In dem Block 20 ist ein Kanal 21 zur Aufnahme und Halterung von sieben nebeneinander angeordneten optischen Lichtleitfasern 22 z.B. aus Kieselglas für einen Teilab schnitt ihrer Erstreckung eingearbeitet. Die verti kale Längsmittelbene des kastenförmigen Gehäuses 12 fällt im wesentlichen mit der in Längsrichtung verlaufenden Symmetrieebene des Kanals 21 zusammen. Dieser Kanal 21 besitzt im Bereich der oberen Fläche 20.1 des Blockes 20 eine Öffnung 21.1 für den Anfang der sieben Lichtleitfasern 22, die dort bün dig zueinander in einer vertikalen, gegenüber der Lagerplatte 11 quer verlaufenden Ebene aneinander gereiht sind. Der Kanal 21 verläuft im Block 20 in einer ersten Strecke 21.2 geradlinig, nahe und fast parallel zu der Seitenwand 20.2 des Blocks sowie dem Stützbügel 15 nebachbart, dann in einer zweiten, beinahe schleifenförmig bzw. halbkreisförmig gekrümmten Strecke 21.3, um endlich durch eine, der Stützplatte 14 für das Spektroskop gegenüber stehen de Öffnung 21.4 in der anderen Seitenwand 20.3 des Blocks 20 aus diesem herauszuführen. Auch in der erwähnten gekrümmten Strecke 21.3 des Kanals 21 sind die Leitfasern 22 nebeneinander angeordnet gehalten. In der Schwalbenschwanzführung 14.2 der Tischplatte 14 gegenüber der Mündungsöffnung 21.4 des Kanals des Blocks 20 sind sieben Durchgangsbohrungen in Längsrichtung dieser Führung nebeneinander angeordnet; diese Bohrungen sind in Fig. 8 in ihrer Gesamtheit mit 23 bezeichnet, während in Fig. 5 nur die erste Bohrung sichtbar und mit 23.1 bezeichnet ist. Die Anordnung der Bohrungen 23 ist spiegelbildlich symmetrisch zur vertikalen Längsmittelebene des kastenförmigen Gehäuses 12 getroffen. Die Achsen der Bohrungen 23 liegen in einer zur vertikalen Längsmit telebene derSchwalbenschwanzführung 14.2 parallelen Ebene, die auch die Symmetrieebene der Öffnung 21.4 des Blockes 20 darstellt. Jede der sieben Lichtleitfasern 22 ist an ihrem äussersten, vom Block 20 abge legenen Ende in einer der erwähnten Bohrungen 23 z.B. durch Verkleben befestigt. Diese Enden der Lichtleit fasern 22 münden bündig an der Oberseite 14.1 der Tischplatte 14 (im Bereich der Plattenführung 14.2), die als Prüfebene für einen das Spektroskop tragen -den Schlitten dient, wie noch näher zu beschreiben ist. Somit sind die Leitfasern 22 jeweils einzeln im Kanal 21 des Blockes 20, in dem sie schlangenförmig gekrümmt verlaufen, durch Formschluss festgehalten und sind auf der Strecke zwischen der Öffnung 21.4 des Blockes 20 und den Bohrungen 23 in geradlinigem Verlauf nebeneinander festgesetzt. Um die Montage der Lichtleitfasern 22 zu erleichtern, münden die Bohrungen 23 in eine gemeinsame Öse 23.2 an der Unterseite der Tischplatte 14 ein. Der Block 20 ist aus zwei miteinander verbundenen Hälften 20.4 und 20.5 zusammengesetzt, um so die Einarbeitung des Kanals 21 zu ermöglichen.

Die Durchgangsbohrungen 23 für die Ausgangsenden der Fasern 22 sind auf einer Seite der vertikalen Längsmittelebene der Führung 14.2 der Tischplatte 14 angeordnet. Spiegelbildlich zu den Bohrungen 23 mit Bezug auf die vertikale Längsmittelebene der Führung 14.2 sind in der Führung selbst ebenso viele Bohrungen vorgesehen, die in Fig. 8 in ihrer Gesamtheit mit 24 bezeichnet sind und von denen in Fig. 5 nur die erste mit 24.1 bezeichnete Bohrung sichtbar ist. Diese Bohrungen 24 münden gleichfalls in eine gemein same Öse 24.2 an der Unterseite der Tischplatte 14.

Unterhalb des Blockes 20 ist eine Lampenfassung 25 mit einer Lampe 25.1 durch einen Bügel 25.2 z.B. mittels Schrauben an die Fläche 11.10 der Lagerplatte 11 befestigt, wobei die Achse der Lampenfassung im wesentlichen parallel zu den Achsen der Buchgangsbohrungen 24 in der Tischplatte 14 verläuft. Das als "Vergleichslicht" dienende, von der Lampe 25.1 ausgestrahlte Licht wird, wie nachfolgend noch näher beschrieben wird, mittels eines ellipsoidförmigen nicht dichroitischen Spiegelreflektor 15.3, z.B. aus Aluminium, reflektiert. Die weisses Licht ausstrahlende Glühlampe 25.1, z.B. eine Halogenlampe, ist im wesentlichen im ersten Brennpunkt des Reflektors 25.3 angeordnet und hat dieselbe Farbtemperatur der Beleuchtungslampe 18. Vor der Lampenfassung 25 im Strahlenbündel der Lampe 25.1 ist ein in Bezug auf die Lagerplatte 11 feststehender Filterhalter 26 beispielsweise mit einem wärmedämmenden Filter 26.1 und mit einer lichtdurchlässigen Vergleichssubstanz 26.2 angeordnet. In Richtung des Lichtflusses hinter der erwähnten Vergleichssubstanz 26.2 ist mittels eines an dem Filterhalter 26 befestigten starren Armes 27.1 eine zur Lampenfassung 25 koaxiale Buchse 27.2 gehaltert. In dieser im wesentlichen im zweiten Brennpunkt des ellipsoidförmigen Reflektors 25.3 angeordneten Buchse 27.2 ist der Anfang eines Bündels von sieben Lichtleitfasern 28 angeordnet (eine davon ist in zentraler Stellung und die übrigen sechs sind in sechskantförmiger Stellung um diese herum und in Kontakt mit derselben angeordnet), wobei diese z.B. ebenfalls aus Kieselglas bestehenden Lichtleitfasern in einer Anfangsstrecke ihrer Länge in einer Schlauchhülle 28.1 miteinander vereint am anderen Ende voneinander getrennt sowie jeweils in einer der Bohrungen 24 der Tischplatte 14 befestigt, z.B. verklebt sind. Auch diese Lichtleitfasern 28 enden bündig in der oberen Fläche der Tischplatte 14 (im Bereich der Schwalbenschwanzführung 14.2), die als Prüfebene für den das Spektroskop tragenden Schlitten, wie nachstehend eingehender beschreiben ist. Die Lichtleitfasern 22 und 28 bestehen, wie bereits erwähnt, z.B. aus Kieselglas, das einer Vorbehandlung zur Herabsetzung der Absorption im blau-violetten Bereich des Spektrums sowie im angrenzenden ultravioletten Bereich unterzogen wird. Sie weisen mit Vorteil, wie dargestellt, Einfaserstruktur mit einem Durchmesser von beispielsweise 1 mm auf.

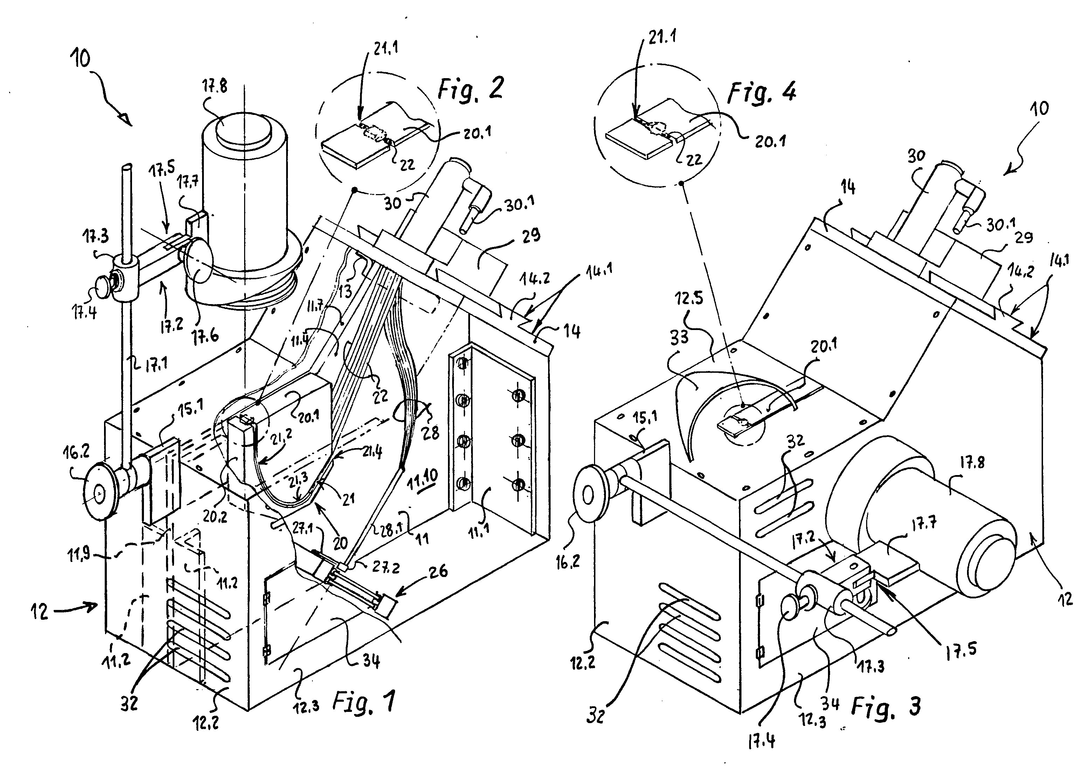

Ein Deckel 12.5 schliesst das kastenförmige Gehäuse 12 ab (Fig. 3). Der Deckel 12.5 besitzt einen zentralen Durchbruch, aus dem die obere Fläche 20.1 des Blocks 20 auftaucht und im Bereich der Öffnung 21.1 des Kanals 21 für die Lichtleitfasern 22 eine Auflageebene für das zu beobachtende Prüfstück bildet.

In der Schwalbenschwanzführung 14.2 der Tischplatte 14 zur Abstützung des Spektroskops ist eine im Verhältnis grosse durchgehende Öse 14.3 ausgebildet, wobei die Längsachse der Öse in der gleichen Ebene, wie die Achse der Lampenfassung 25, und in der vertikalen Längsmittelebene der Führung 14.2 liegt.

Auf der Schwalbenschwanzführung 14.2 ist ein Schlitten 29 für das Spektroskop 30 in Längsrichtung der Führung verschieblich angeordnet. Der Schlitten besitzt ein im wesentlichen runden Blindloch 29.1 mit zur Führung normal stehende Achse, das zum lösbaren Anbringen des Spektroskops dient. Ausserdem besitzt der Schlitten 29 eine durchgehende Öse 29.2, deren Achse im wesentlichen in der vertikalen Längsmittelebene der Führung 14.2 liegt. Die Öse 29.2 ist bedeutend kleiner bemessen als die Öse 14.3 in der Führung 14.2. In der Bodenwand des Blindloches 29.1 ist eine weitere durchgehende Öse 29.3 gebildet, deren Längsachse zur vertikalen Längsmittelebene der Führung 14.2 normal steht. Die Abmessungen der Öse 29.3 sind derart gewählt, dass diese auf der oberen Fläche 14.1 der Führung 14.2 für den Schlitten 29 paarweise je eine der Bohrungen 23 und je eine der Bohrungen 24 für die Enden der Lichtleitfasern 22 und 28 einschliesst. Ausserdem entsprechen die Abmessungen der Öse 29.3 wenigstens jenen des stirnseitigen Schlitzes des Spektroskops 30. Die durch die Längsachse der Öse 29.3 gehende vertikale Ebene enthält die Beobachtungsachse durch das Spektroskop 30. Diese Ebene steht senkrecht zu den vertikalen Ebenen, in denen die Beleuchtungslampe 18 schwenkbar ist. Ausserdem ist für jede Stellung des Schlittens 29 mit der Öse 29.3 in Übereinstimmung mit einem Paar von Bohrungen 23, 24 die Längsöse 29.2 des Schlittens immer entsprechend der Öse 14.3 der Führung 14.2 ausgerichtet. Das Restlichtbündel, das von der Lampe 25.1 ausgehend die Ösen 14.3 u. 29.2 durchläuft, wird zur Beleuchtung der Skala 30.1 am Spektroskop 30 benutzt (Fig. 1, 3).

In den Fig. 5 und 10 ist mit 31 eine Nachstelleiste zum Ausgleichen der Spiele mittels einer Stellschraube 31.1 bezeichnet. In den Fig. 1 und 3 sind mit 32 Lüftungsschlitze in den Wänden des Gehäuses 12 im Bereich der Lampe 25.1 und mit 34 eine Tür für den Zugang zur Lampenfassung 25 und zum Filterhalter 26 im Gehäuse 12 bezeichnet.

Die elektrischen Einrichtungen zur Verbindung und Stromversorgung der elektrischen Teile der Beleuchtungsvorrichtung 10 sind an sich bekannt und daher der besseren Klarheit halber in der Zeichnung nicht dargestellt.

Funktionsweise der erfindungsgemässen Beleuchtungs vorrichtung:

Die Beleuchtungsvorrichtung 10 wird an das Stromnetz angeschlossen und die Lampen 18 und 25.1 werden eingeschaltet. Das Prüfstück wird auf die Auflageebene 20.1 in den Bereich der Öffnung 21.1, in welche die Lichtleitfasern 22 münden, gelegt. Das Prüfstück kommt so in Kontakt oder im unmittelbare Nähe zu dem Anfang einer oder mehrerer Lichtleitfasern 22 zu liegen. Nach Lösen der Druckschraube 17.4 wird der Klemmarm 17.2 entlang dem Schwenkarm 17.1 verschoben und eventuell diesem gegenüber gedreht, bis das von der Lampe 18 ausgestrahlte Weiss lichtbündel im zweiten Brennpunkt des Reflektors 19 konzentriert das Prüfstück trifft. In dieser Stel -lung wird nun der Klemmarm 17.2 festgesetzt. Je nach den Absorptions- und Formgebungsbeschaffenheiten des Prüfstücks wird nach Lösen der Rändelmutter 16.2 der Schwenkarm 17.1 um den Schraubstift 16 gedreht, beispielsweise in die in Fig. 1 gezeigte Stellung, in der die Beleuchtung des Prüfstücks von oben oder in die in Fig. 3 gezeigte Stellung, in der diese Beleuchtung "rasant" von der Seite erfolgt, wobei die Achse des von der Gruppe Lampe 18 - Reflektor 19 aus gestrahlten Lichtbündels immer in einer Ebene gerich tet ist, die zur der vertikalen, die Achse der Beobachtung durch das Spektroskop enthaltenden Ebene senkrecht steht. Bei der "rasanten" Beleuchtung kann man zur Erhöhung des Lichtflusses auf das Prüfstück zu gem. Fig.3 einen optischen Zusatzreflektor 33 an die Auflageebene 20.1 abnehmbar anbringen, um so einen Teil des Lichtflusses, der andernfalls verloren ginge, auf das Prüfstück zu fokussieren. Dieser ab -nehmbare Zusatzreflektor 33 ist im wesentlichen el -lipsoidförmige ausgebildet und besteht z.B. aus Aluminium. Das Restlicht, das den Prüfling durchstrahlt, tritt in das Eingangsende der Lichtleitfasern 22 ein, wo das Prüfstück diese Faserenden berührt oder sich in deren unmittelbarer Nähe befindet. Dieses Restlicht wird durch die Leitfasern 22 geleitet und zwar bis zu deren Ausgangsende auf der oberen Fläche 14.1 der zur Verstellung des Schlittens 29 mit dem Spektro skop dienenden Führung 14.2 der Tischplatte 14. Auf diesem Wege durch die Lichtleitfasern 22 wird das Restlicht homogenisiert. Dadurch tritt aus dem Ausgangsende jeder dieser Lichtleitfasern 22 ein Restlichtbündel mit im wesentlichen zur Beobachtungs richtung durch das Spektroskop 30 paralleler Achse aus. Gleichzeitig tritt aus den Lichtleitfasern 28 ein Vergleichslichtbündel aus, das von der Lampe 25.1 stammt und dessen Achse ebenfalls im wesentli chen parallel zur Beobachtungsrichtung durch das Spektroskop 30 verläuft. Zur Optimierung der spektroskopischen Beobachtung überprüft der Beobachter, aus welcher der Lichtleitfasern 22 in dem Augenblick und für das betreffende Prüfstück das geeignetste Licht strömt, indem er das Prüfstück auf der Auflageebene 20.1 im Bereich der Eingangsenden der Lichtleitfasern 22 von Hand verstellt. Dabei werden die Lichtleitfasern 22 auf der Tischplatte 14 mit nacktem Auge beobachtet. Die für die jeweilige spektroskopische Beobachtung brauchbarste Faser 22 wird am Ausgang heller leuchten und mit der Farbe des Prüfstücks stärker gesättigt sein. Sobald diese Faser 22 aufgefunden ist, wird der Schlitten 29 auf der Führung 14.2 derart verstellt, dass der stirnseitige, der Öse 29.3 des Schlittens gegenüber lie gende Schlitz des Spektroskops 30 mit der aufgefun denen Lichtleitfaser 22 übereinstimmt. Bei dieser Stellung tritt in den Schlitz des Spektroskops 30 zuzüglich zu dem Restlichtbündel der ausgewählten Lichtleitfaser 22 auch ein Vergleichslichtbündel, das von der Lampe 25.1 über diejenige Lichtleitfaser 28 zugeleitet wird, die sich mit ihrem Ausgangs ende auf der Auflagefläche 14.1 der Führung 14.2 in der Öse 29.3 des Schlittens 29 zusammen mit dem Ausgangsende der für die spektroskopische Beobachtung ausgewählten Lichtleitfaser 22 gepaart befindet.

Aus obigen Ausführungen ergeben sich für die Beleuch tungsvorrichtung gemäss der Erfindung nachstehende Hauptvorteile:
- Die Lichtleitfassern zur Durchleitung das Restlichtes von dem spektroskopisch zu beobachtenden Prüfstück, die z.B. aus Kieselglas mit Einfaserstruktur und einem Durchmesser von beispielsweise 1 mm bestehen bewirken entlang ihrer Erstreckung eine Homogeni sierung des Restlichtes in der Weise, dass der stirn seitige Schlitz des Spektroskops gleichmässig beleuch tet wird und daher fleckige Spektren vermieden werden. Der dabei auftretende Lichtverlust ist vor allem im blau- violetten und ultravioletten Bereich des Spektrums äusserst gering infolge der hohen Durchlässigkeit des Prüfmaterials gegenüber dem Licht in den er wähnten Bereichen des Spektrums. Ausserdem ist die in das Spektroskop eintretende wilde Lichtstrahlung bzw. das nicht durch das Prüfstück geflossene Licht z.B. bei kleinen Steinen oder bei Steinrändern, die im Bereich des sichtbaren Lichtes stark absorbieren, äusserst gering. Wie bereits hervorgehoben, bestehen diese Lichtleitfasern mit Vorteil zus Kieselglas, das einer besonderen Vorbehandlung unterzogen wird, um dessen Absorption im blau-violetten Bereich des sichtbaren Spektrums sowie im nahen ultravioletten Bereich auf ein Minimum zu reduzieren.

Ausserdem ist zu beachten, dass zur wirksamen Homoge nisierung des Lichtes im Innern der Lichtleitfasern längere und gekrümmte Strecken von Vorteil sind.

Der kleine Durchmesser der Lichtleitfasern in Verbin dung mit dem Umstand, dass sich das Prüfstück im unmittelbaren Kontakt mit dem Eingangsende der Faser oder in dessen unmittelbarer Nähe befindet, gestattet bei einwandfreier Einstellung des einfallenden Lichtbündels, dass das gesamteRestlicht und nur dieses (bezogen auf den vollen Querschnitt des Eingangs endes der Lichtleitfaser) in die betreffende Faser eintritt, um zu dem Schlitz des Spektroskops geleitet zu werden. Dadurch wird es möglich, Restlicht zu ana lysieren, das mit von der Lampe stammendem Licht nicht vermischt ist und das Prüfstück nicht durchflossen hat.

Der kleine Durchmesser jeder Lichtleitfaser gestattet ausserdem, das gesamte Restlicht und nur dieses Licht auch aus sehr kleinen Prüfstücken, wie Edelsteinen, zurückzugewinnen: dies bis zu Abmessungen, die die Querschnittsfläche (z.B. mit einem Durchmesser von 1 mm) der ausgewählten Lichtleitfaser voll decken.

Diese Vorteile sind gemäss der Erfindung auch unter Verwendung einer einzigen Lichtleitfaser zum Zuleiten des Restlichtes des Prüfstücks zum Schlitz des Spektro skops erzielbar.

Anstatt Lichtfasern mit Einfaserstruktur zu verwenden, ist es auch möglich, solche mit Mehrfaserstruktur einzustezen (dabei erfährt nur die Homogenisierung des durchgeleiteten Lichtes eine Abschwächung).

- Die Ellipsoidform des Speigelreflektors der Beleuch tungslampe für das Prüfstück gestattet eine direkte Fokussierung des Lichtes auf das Prüfstück. Daher kann auf herkömmliche optische Einrichtungen zwischen der Beleuchtungslampe und dem Prüfstück (mit Ausnahme eines eventuellen wärmedämmenden Filters) verzichtet werden, insbesondere auch auf die Standard-Lichtleitfasern (aus Glas), die besonders im blau-violetten Be reich des Spektrums und teilweise auch im ultraviolet ten Bereich stark absorbieren. Daher kann auch eine weniger lichtstarke Lampe, z.B. eine solche zu 50 W, verwendet werden. Dies gilt auch für die Lampe, die das weisse Vergleichslicht liefert und deren Lichtbün del über den zugeordneten Ellipsoidreflektor auf das Eingangsende der Fasern zur Durchleitung des weissen Vergleichslichtes oder des durch eine bekannte Substanz geflossenen Restlichtes geleitet wird. Diese Lampe für das Vergleichslicht kann daher auch im Innern des kastenförmigen Gehäuses 12 ohne zusätzliche Mittel zur Zwangslüftung angeordnet werden.

Da ausserdem der erwähnte Reflektor aus Aluminium besteht und nicht dichroitisch ist, werden Absorptionen im sichtbaren und teilweise auch im ultravioleten Be reich ausgeschaltet.

- Der abnehmbare Spiegelreflektor auf der Auflageebene für das Prüfstück wirkt aus dieses als Lichtkondensor und gestattet eine weitere Rückgewinnung der Lichtenergie, widerum mit der Folge eines möglichen Einsatzes einer weniger starken Beleuchtungslampe.

- Durch die Anordnung der Beleuchtungslampe für das Prüfstück ausserhalb des Gehäuses gestattet, auf das bei bekannten Beleuchtungsvorrichtungen erforderliche Lüfterrad zu verzichten.

- Die Paarung, im Bereich des Schlitzes des Spektroskops, des Ausgangsendes jeder das Restlicht vom Prüfstück zum Spektroskop leitenden Faser mit dem Ausgangsende einer das Vergleichslicht zum Spektro -skop leitenden Faser ermöglicht die Identifizierung von schwachen Absorptionen, die andernfalls nicht als solche erkennbar wären, sowie den Vergleich mit Spektren bekannter Substanzen.

- Die zur vertikalen, die Beobachtungsachse beinhaltenden Ebene rechtwinklige Richtung des Lichtbündels zur Beleuchtung des Prüfstücks gestattet, Blendungen des Beobachters während der Prüfung und der Einstellung des Prüfstücks zu vermeiden.

Es versteht sich, dass zahlreiche Abwandlungen gegen über den beschriebenen und dargestellten Einzelhei -ten zulässig sind, ohne dass der Erfindungsbereich und damit der beanspruchte Schutzbereich vorliegender Erfindung überschritten wird.

So kann z.B. auf die das weisse Vergleichslicht liefernde Lampe verzichtet werden, wenn das weisse Licht der das Prüfstück beleuchtenden Lampe auch als Vergleichslicht verwendet und hierzu auch den entspre chenden Lichtleitfasern und zur Beleuchtung der Skala am Spektroskop zugeführt wird. Ausserdem kann die Tischplatte für das Spektroskop anstatt einer sich geradlinig erstreckenden Auflageebene eine gekrümmt verlaufende Auflagefläche für das Spektroskop aufwei sen. Die Auflagefläche für das Prüfstück kann durch eine am Stativ befestigte Platte statt durch die obe re Fläche des den Kanal für die Leitfasern einschlies senden Blocks gebildet sein.

## Ansprüche

1. Beleuchtungsvorrichtung zur spektroskopischen Beobchtung von Mineralien, Juwelen o.dgl., bei der das zu prüfende Stück mittels einer Weisslichtquelle beleuchtet wird, dadurch gekennziech net, dass sie wenigstens eine Lichtleitfaser umfasst, um das durch das Prüfstück geflossene Restlicht einem Beobachtungs-Spektroskop zuzuleiten.

2. Beleuchtungsvorrichtung nach Anspruch 1, dadurch gekennzeichnet, dass jede das durch das Prüfstuck geflossene Beleuchtungs-Restlicht zuführende Lichtleitfaser (22) mit ihrem Eingangsende in der Auflagefläche (20.1) für das Prüfstück in der Beleuchtungsvorrichtung derart angeordnet ist, dass die Lichtfaser (22) mit diesem einen Ende in direktem Kontakt mit dem Prüfstück oder in dessen unmittelbarer Nähe das durch das Prüfstück geflossene Restlicht empfängt und durchleitet.

3. Beleuchtungsvorrichtung nach Anspruch 1 oder 2, dadurch gekennzeichnet, dass jede das durch das Prüfstück geflossene Restlicht durchleitende Lichtleitfaser (22) mit seinem Ausgangsende in eine Prüfebene bzw. Prüffläche (14.1) einmündet, wobei auf derselben ein Beobachtungs-Spektroskop (30) diesem Ende der Lichtleitfaser (22) deart zugeordnet ist, dass die lichtleitfaser (22) über dieses ihr Ende ein durcg das Prüfstück geflossenes Restlichtbündel in im wesentlichen zur Beob -achtungsrichtung durch das Spektroskop (30) paral leler Richtung auf den stirnseitigen Schlitz des Spektroskops abgibt.

4. Beleuchtungsvorrichtung nach Anspruch 3, dadurch gekennzeichnet, dass sie eine Mehrzahl von Lichtleitfasern (22) zum Durchleiten des durch das Prüfstück geflossenen Restlichtes umfasst, wobei die erwähnten Ausgangsenden der Lichtleitfasern in der Prüffläche oder Prüfebene (14.1) entsprechend der Verschieberichtung eines in der Beleuch tungsvorrichtung verschiebbar gelagerten Spektroskophalters (29) aneinander gereiht sind, und wobei der erwähnte Spektroskophalter gegenüber der Prüffläche oder Prüfebene auf einer Lager- und Führungsvorrichtung (14, 14.2) derart verschiebbar angeordnet ist, dass der stirnseitige Schlitz des auf dem verschiebbaren Halter (29) angeordneten Spektroskops (30) in Übereinstimmung mit dem Ausgangsende einer jeden Lichtleitfaser (22) wahlwei se derart positionierbar ist, dass dem Spektroskop nur das durch das Prüfstück geflossene Restlichtbündel über dieses Ende der betreffenden Lichtleit faser (22) zugeführt wird, während die entgegengesetzten Eingangsenden der Lichtleitfasern (22) in der Auflageebene (20.1) für das Prüfstück angeordnet sind.

5. Beleuchtungsvorrichtung nach einem oder mehr der Ansprüche 1 bis 4, dadurch gekennzeichnet, dass jede das durch das Prüfstück geflossene Restlicht durchleitende Lichtfaser (22) wenigstens auf einer Teilstrecke ihrer Länge derart krummförmig verläuft, dass das erwähnte Restlicht im Innern der Lichtleitfaser (22) homogenisiert wird.

6. Beleuchtungsvorrichtung nach einem der Ansprüche 1 bis 5, dadurch gekennzeichnet, dass sie wenigstens eine Lichtleitfaser (28) umfasst, die dem Spektroskop (30) weisses Vergleichslicht oder, abgesehen von dem durch jede Lichtleitfaser (22) zugeleitetem Beleuchtungs-Restlicht, ein durch eine bekannte Substand geflossenes Restlicht zuleitet, wodurch dem Beobachter die Möglichkeit geboten wird, durch das Spektroskop (30) einen direkten Vergleich des Spektrums des durch das Prüfstück geflossenen Beleuchtungslichtes mit dem erwähnten weissen Vergleichslicht bzw. mit dem Spektrum einer oder mehrerer bekannten Substanzen vorzunehmen.

7. Beleuchtungsvorrichtung nach Anspruch 6, dadurch gekennzeichnet, dass jede das Vergleichslicht bzw. ein durch eine bekannte Substanz geflossenes Restlicht durchleitende Lichtleitfaser (28) ebenfalls mit dem Ausgangsende in die Prüfebene ober Prüffläche (14.1) einmündet, wobei das Spektroskop (30) der Beleuchtungsvorrichtung mit diesem Ende der Lichtleitfaser (28) derart in Übereinstimmung bringbar ist, dass diese Lichtleitfaser (28) über dieses ihr Ende ein Bündel von weissem Vergleichs licht bzw. von durch eine bekannte Substanz geflossenem Restlicht in im wesentlichen zur Beobachtungsrichtung durch das Spektroskop (30) paral leler Richtung auf den stirnseitigen Schlitz des Spektroskops abgibt, und wobei die Achse dieses Lichtbündels im wesentlichen Parallel gerichtet ist zur Achse des durch das Ausgangsende jeder Beleuchtungs-Lichtleitfaser (22) in der Prüfebene oder Prüffläche (14.1) abgegebenen, durch das Prüf stück geflossenen Restlichtbündels, während das entgegengesetzte Eingangsende jeder weisses Vergleichslicht bzw. ein durch eine bekannte Substanz geflossenen Restlicht durchleitenden Lichtleitfaser (28) in einer zum Empfangen und Durchleiten dieses weissen Vergleichslichtes bzw. des durch eine bekannte Substand geflossenen Rest -lichtes geeigneten Stellung angeordnet ist.

8. Beleuchtungsvorrichtung nach Anspruch 7, dadurch gekennzeichnet, dass sie eine Mehrzahl von weisses Vergleichslicht bzw. ein durch eine bekannte Substanz geflossenes Restlicht durchleitenden Lichtleitfasern (28) umfasst, wobei deren Ausgangsenden in der erwähnten Prüfebene oder Prüfflächet (14.1) entsprechend der Verschieberich -tung eines in der Beleuchtungsvorrichtung verschiebbar angeordneten Spektroskophalters (29) aneinander gereiht sind, und wobei der erwähnte Spektroskophalter gegenüber der Prüfebene oder -fläche auf einer Lager- und Führungseinrich tung (14, 14.2) derart verschiebbar angeordnet ist, dass der stirnseitige Schlitz des auf seinem verschiebbaren Halter (29) angebrachten Spektroskops (30) derart in Übereinstimmung mit dem entsprechenden Ausgangsende einer jeden Lichtleitfa ser (28) positionierbar ist, dass dem Spektroskop nur das Bündel von weissem Vergleichslicht bzw. von durch eine bekannte Substanz geflossenem Restlicht über dieses Ende der Lichtleitfaser (28) zugeführt wird.

9. Beleuchtungsvorrichtung nach Anspruch 9, dadurch gekennzeichnet, dass gegenüber dem stirnseitigen Schlitz des auf dem erwähnten verschiebbaren Hal ter (29) angeordneten spektroskops (30) die Ausgangsenden der das durch das Prüfstück geflossene Restlicht zuleitenden Lichtleitfasern (22) und die Ausgangsenden der das weisse Vergleichslicht bzw. ein durch eine bekannte Substanz geflossene Restlicht zuleitenden Lichtleitfasern (28) in der Prüfebene oder Prüffläche jeweils zu zweit ge paart sind und Lichtbündel abgeben, die nebeneinander und mit zueinander parallelen Achsen in Richtung auf den stirnseitigen Schlitz des Spek -troskops (30) derart verlaufen, dass in jeder Arbeitsstellung des Spektroskops gegenüber den ge paarten Ausgangsenden der Lichtleitfasern (22,28) der Beobachter gleichzeitig jeweils zwei neben einander stehende Spektren sehen kann, von denen eines das Prüfstück und das andere das Vergleichs licht oder eine bekannte Substanz betrifft.

10. Beleuchtungsvorrichtung nach einem beliebigen der vorhergehenden Ansprüche, dadurch gekennzeich net, dass die erwähnte Weisslichtquelle (18) zur Beleuchtung des Prüfstücks ausserhalb des Stativs (kastenförmiges Gehäuse 12) der Beleuchtungsvor -richtung gelagert ist.

11. Beleuchtungsvorrichtung nach Anspruch 10, dadurch gekennzeichnet, dass die erwähnte Weisslichtquel le (18) gegenüber dem Stativ (kastenförmiges Gehäuse 12) der Beleuchtungsvorrichtung in vertika len, zu der die Beobachtungsrichtung durch das Spektroskop (30) enthaltenden Ebene rechtwinkligen Ebenen schwenkbar gelagert ist und das von dieser Quelle (18) ausgestrahlte Licht mittels eines optischen Reflektors (19) derart reflektierbar ist, dass eine optimale Arbeitsstellung der Lichtquelle (18) gegenüber dem Prüfstück zur Vermeidung von Blendungen des Beobachters ermöglicht ist.

12. Beleuchtungsvorrichtung nach Anspruch 10 oder 11, dadurch gekennzeichnet, dass die erwähnte Weisslichtquelle (18) im Sinne einer dem Stativ (kastenförmiges Gehäuse 12) gegenüber Zu- oder Wegbewegung einstellbar gelagert ist.

13. Beleuchtungsvorrichtung nach einem beliebigen der vorhergehenden Ansprüche, dadurch gekennzeichnet, dass die erwähnte Weisslichtquelle (18) im wesentlichen im ersten Brennpunkt eines ellipsoidförmigen Reflektors (19) angeord net ist, wobei der zweite Brennpunkt des Reflektors im Arbeitsbetrieb auf die Auflagefläche (20.1) für das Prüfstück in der Beleuch -tungsvorrichtung justierbar ist.

14. Beleuchtungsvorrichtung nach Anspruch 13, dadurch gekennzeichnet, dass der erwähnte optische Reflektor (19) aus undurchsichtigem Reflexionsmaterial hergestellt ist.

15. Beleuchtungsvorrichtung nach einem beliebigen der vorhergehenden Ansprüche, dadurch gekennzeichnet, dass stirnseitig zur erwähnten Weiss lichtquelle (18) ein Filterhalter (18.1) für austauschbare optische Filter zum Auffangen des von der Lichtquelle ausgestrahlten und vom zugeordneten Reflektor (19) reflektierten Lichtbündels angeordnet ist.

16. Beleuchtungsvorrichtung nach einem oder mehreren der Ansprüche 6 bis 9, dadurch gekennzeich net, dass die erwähnten, zur Durchleitung des weissen Vergleichslichtes bzw. eines durch eine bekannte Substanz geflossenen Restlichtes bestimmten Lichtfasern das von der erwähnten Licht quelle zur Beleuchtung des Prüfstücks ausgestrahlte Weisslicht erhalten und weiterleiten.

17. Beleuchtungsvorrichtung nach einem oder mehreren der Ansprüche 6 bis 9, dadurch gekennzeichnet, dass die zur Durchleitung des weissen Vergleichs lichtes bzw. eines durch eine bekannte Substanz geflossenen Restlichtes bestimmten Lichtleitfa -sern (28) das von einer von der Lichtquelle (18) des Beleuchtungslichtes für das Prüfstück getrenn ten Lichtquelle (25.1) erhalten und weiterleiten.

18. Beleuchtungsvorrichtung nach Anspruch 17, dadurch gekennzeichnet, dass die erwähnte Weisslichtquel le (18) zur Beleuchtung des Prüfstücks und die erwähnte Lichtquelle für weisses Vergleichslicht (25.1) dieselbe Farbtemperatur aufweisen.

19. Beleuchtungsvorrichtung nach Anspruch 17 oder 18, dadurch gekennzeichnet, dass die erwähnte Lichtquelle für weisses Vergleichslicht (25.1) im wesentlichen im ersten Brennpunkt eines optischen ellipsoidförmigen Reflektors (25.3) angeordnet ist.

20. Beleuchtungsvorrichtung nach Anspruch 19, dadurch gekennzeichnet, dass der erwähnte optische Reflek tor (25.3) aus undurchsichtigem Reflexionsmaterial hergestellt ist.

21. Beleuchtungsvorrichtung nach Anspruch 19 oder 20, dadurch gekennzeichnet, dass im wesentlichen im zweiten Brennpunkt des erwähnten optischen Ellipsoid-Reflektors (25.3) die Eingangsenden der zur Durchleitung des weissen Vergleichslichtes bzw. eines durch eine bekannte Substanz geflossenen Restlichtes bestimmten Lichtleitfasern (28) derart gebündelt angeordnet sind, dass sie das von der zugeordneten Lichtquelle (25.1) ausgestrahlte und vom zugeordneten Reflektor (25.3) reflektierte Licht empfangen und weiterleiten.

22. Beleuchtungsvorrichtung nach Anspruch 16 oder einem der Ansprüche 17 bis 21, dadurch gekennzeichnet, dass in der Verlaufstrecke des Vergleichslichtbündels ein Filterhalter (26) für auswechsel bare optische Filter angeordnet ist, wobei diesen Filtern das Eingangsende jeder Lichtleitfaser(28) zur Weiterleitung des weissen Vergleichslichtes bzw. eines durch eine bekannte Substanz geflossenen Restlichtes nachgeschaltet ist.

23. Beleuchtungsvorrichtung nach Anspruch 22, dadurch gekennzeichnet, dass im erwähnten Filterhalter (26) eine durchsichtige Vergleichssubstanz austauschbar angeordnet ist.

24. Beleuchtungsvorrichtung nach Anspruch 1, dadurch gekennzeichnet, dass das von der Weisslichtquelle zur Beleuchtung des Prüfstücks ausgestrahlte Licht auch die Skala des Spektroskops beleuchtet.

25. Beleuchtungsvorrichtung nach Anspruch 17, dadurch gekennzeichnet, dass das von der Vergleichslichtquelle (25.1) ausgestrahlte Weisslicht auch die Skala des Spektroskops beleuchtet.

26. Beleuchtungsvorrichtung nach Anspruch 4, 8 oder 9 und 25, dadurch gekennzeichnet, dass das von der Vergleichslichtquelle (25.1) ausgestrahlte Licht, das die Skala des Spektroskops (30) be -leuchtet, durch in der Lager- und Führungsein -richtung (14, 14.2) und im Spektroskophalter (29) vorgesehene Ösen (14.3, 29.2) fliesst, wobei diese Ösen (14.3, 29.2) für jede Arbeitsstellung des an dem gegenüber der Lager- und Führungseinrichtung (14, 14.2) verschiebbaren Halter (29) angebrachten Spektroskops (30) unter einander immer einen freien Durchgang für das von der erwähnten Lichtquelle (25.1) ausgestrahl te Licht definieren.

27. Beleuchtungsvorrichtung nach einem beliebigen der vorhergehenden Ansprüche, dadurch gekenn -zeichnet, dass sie einen abnehmbaren, wahlweise auf die Auflageebene (20.1) für das Prüfstück in der Beleuchtungsvorrichtung anbringbaren optischen Zusatzreflektor (33) aufweist, und dieser Reflektor zur Fokussierung eines andernfalls verloren gehenden Teiles des von der Beleuchtungslichtquel le ausgestrahlten Weisslichtes am Prüfstück dient.

28. Beleuchtungsvorrichtung nach einem beliebigen der Ansprüche 1 bis 9, dadurch gekennzeichnet, dass jede Lichtleitfaser (22,28) Einfaserstruktur aufweist.

29. Beleuchtungsvorrichtung nach einem beliebigen der Ansprüche 1 bis 9, dadurch gekennzeichnet, dass jede Lichtleitfaser (22,28) Mehrfaserstruktur auf weist.

30. Beleuchtungsvorrichtung nach einem beliebigen der Ansprüche 1 bis 9, dadurch gekennzeichnet, dass jede Lichtleitfaser (22,28) aus Kieselglas besteht.

31. Beleuchtungsvorrichtung nach Anspruch 30, bei der jede Lichtleitfaser (22,28) aus Kieselglas besteht, das zur Herabsetzung der Absorption im blau-violetten Bereich des sichtbaren Spektrums und im benachbarten ultravioletten Bereich einer entsprechenden Vorbehandlung unterzogen wird.

32. Beleuchtungsvorrichtung nach einem beliebigen der Ansprüche 2 bis 5, dadurch gekennzeichnet, dass sie eine Mehrzahl von Lichtleitfasern (22) zur Durchleitung des durch das Prüfstück geflossenen weissen Restlichtes umfasst und diese Lichtleitfasern im Innern eines das Stativ der Beleuchtungs vorrichtung bildenden kastenförmigen Gehäuses (12) auf einer Teilstrecke ihrer Länge in einem innerhalb eines Blockes (20) eingearbeiteten Kanals (21) nebeneinander angeordnet gehalten sind, wobei dieser Kanal (21)mit dem Eingangsende (in 21.1) in die obere die Auflageebene für das Prüfstück bildende bzw. tragende Fläche des Blockes (20) mündet, wo sich auch die Eingangsenden der erwähnten Lichtleitfasern (22) befinden, und mit seinem Ausgangsende (in 21.4) gegenüber einer das verschiebbare Spektroskop der Beleuchtungsvorrich tung tragenden Tischplatte (14) mündet, und dass in dieser Tischplatte (14) eine der Anzahl der Lichtleitfasern (22) gleiche Anzahl von Durchgangs bohrungen (23) vorgesehen ist, in welchen die Ausgangsenden der Lichtleitfasern (22) befestigt sind und durch diese Bohrungen (23) hindurch bündig in die obere Fläche der Tischplatte (14) münden, wobei die Tischplatte als Prüfebene (14.1) dient für einen als Schlitten ausgebildeten Halter (29), der das Spektroskop (30) trägt und auf einer entsprechenden, mit der Tischplatte (14) fest verbundenen Längsführung (14.2) verschiebbar angeordnet ist, während die erwähnten Durchgangsbohrungen (23) in Richtung der Verschiebung des Schlittens (29) gegenüber der Führung (14.2) miteinander fluchten.

33. Beleuchtungsvorrichtung nach einem beliebigen der Ansprüche 6 bis 9 und 32, dadurch gekennzeichnet, dass in der erwähnten Tischplatte (14) untereinander fluchtende Durchgangsbohrungen (24) in einer der Anzahl der Bohrungen (23) gleichen Anzahl parallel zu diesen angeordnet sind und in denen die Ausgangsenden der das weisse Vergleichslicht bzw. ein durch eine bekannte Substanz geflossenes Restlicht dem Spektroskop (30) zuleitenden Lichtleitfasern (28) aufgenommen sind.

34. Beleuchtungsvorrichtung nach Anspruch 32, dadurch gekennzeichnet, dass die das durch das Prüfstück geflossene Restlicht durchleitenden Lichtleitfasern (22) im Kanal (21) an der oberen Fläche des Blocks (20) in einer zu der die Beobachtungsrichtung durch das Spektroskop (30) enthaltenden Ebene im wesentlichen rechtwinkligen Ebene aneinander ge reiht sind, wobei die Weisslichtquelle (18) zur Beleuchtung des Prüfstücks derart positionierbar ist, dass die Achse des von dieser Lichtquelle ausgestrahlten und vom zugeordneten Reflektor (19) reflektierten Lichtbündels in dieser im wesentlichen rechtwinkligen Ebene enthalten ist.

35. Beleuchtungsvorrichtung nach Anspruch 1, dadurch gekennzeichnet, dass die erwähnte Weisslichtquelle eine leistungsschwächere Glühlichtlampe, z.B. Halogenlampe, ist.

36. Beleuchtungsvorrichtung nach Anspruch 17, dadurch gekennzeichnet, dass die erwähnte weisses Vergleichslicht ausstrahlende Lichtquelle (25.1) eine leistungsschwächere Glühlampe, z.B. Halogenlampe, ist.

37. Beleuchtungsvorrichtung nach Anspruch 36, dadurch gekennzeichnet, dass die erwähnte weissen Vergleichslicht ausstrahlende Lichtquelle (25.1) im Stativ (kastenförmiges Gehäuse 12) der Beleuchtungsvorrichtung untergebracht ist.

Fig. 1

Fig. 2

Fig. 3

Fig. 4

EP 0 301 329 A2

Fig. 5

EP 0 301 329 A2

Fig. 6

EP 0 301 329 A2

Fig. 7

Fig. 8

Fig. 9

Fig. 10

Fig. 11

EP 0 301 329 A2